**Europäisches Patentamt**

**European Patent Office**

**Office européen des brevets**

(19)

(11) **EP 1 722 488 A1**

(12) **EUROPÄISCHE PATENTANMELDUNG**

(43) Veröffentlichungstag:
**15.11.2006 Patentblatt 2006/46**

(51) Int Cl.:
***H04B 3/32*** *(2006.01)*

(21) Anmeldenummer: **05010455.3**

(22) Anmeldetag: **13.05.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **Siemens Schweiz AG**
**8047 Zürich (CH)**

(72) Erfinder: **Freudenmann, Robert**
**8854 Siebnen (CH)**

(74) Vertreter: **Kley, Hansjörg**
**c/o Siemens AG**
**Patentabteilung**
**Postfach 22 16 34**
**80506 München (DE)**

(54) **SHDSL-Übertragungsstrecke**

(57)    Bei SHDSL-Übertragungsstrecken stellt sich wegen der Einflüsse von NEXT (Nah-Nebensprechen) eine empfindliche Beeinträchtigung hinsichtlich Reichweite und Übertragungsrate. Die Verwendung eines einzigen Kupferaderpaars ist dabei durch die Norm vorgegeben. Um die vorstehenden Nachteile zu überwinden wird eine SHDSL-Übertragungsstrecke vorgeschlagen bei der die beiden Modems (1, 2) mit zwei Kupferaderpaaren (31, 32) anstelle von nur einem Kupferaderpaar verbunden ist. Diese SHDSL-Übertragungsstrecke bleibt hinsichtlich der Beschaltung und des SHDSL-Übertragungsverfahrens normkonform.

**Fig. 4**

EP 1 722 488 A1

**Beschreibung**

Die vorliegende Erfindung betrifft eine SHDSL-Übertragungsstrecke gemäss dem Oberbegriff des Patentanspruches 1.

Im folgenden werden anstelle einer deutschen Nichtfachsprache die englischsprachige Nomenklatur und Akronyme aus der Standardisierung der Organisationen ITU-T und ETSI benutzt, wie z.B.

«NEXT» Near End Cross Talk, Nebensprechen;
«FEXT» Far End Cross Talk, Fern-Nebensprechen;
«DLL» Digital Local Line;
usw.

Durch die Verwendung standardisierter Begriffe und Akronyme lassen sich Unklarheiten vermeiden. Eine Liste der verwendeten Akronyme, Abkürzungen und Begriffe am Schluss dieses Dokumentes bildet einen integralen Bestandteil dieser Schrift.

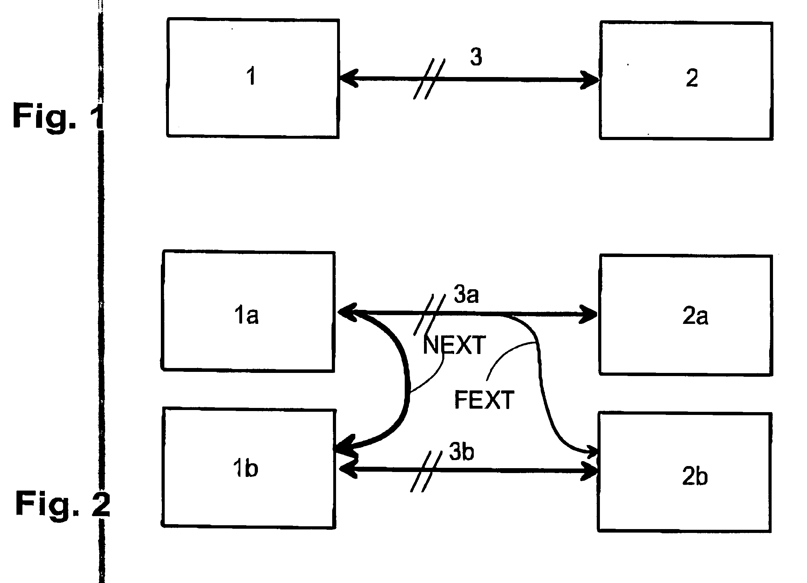

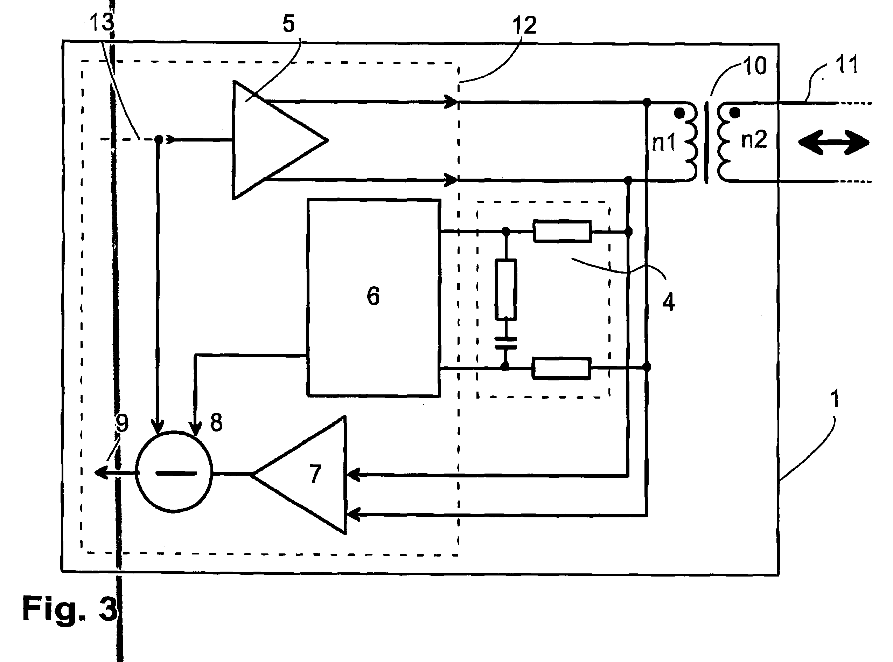

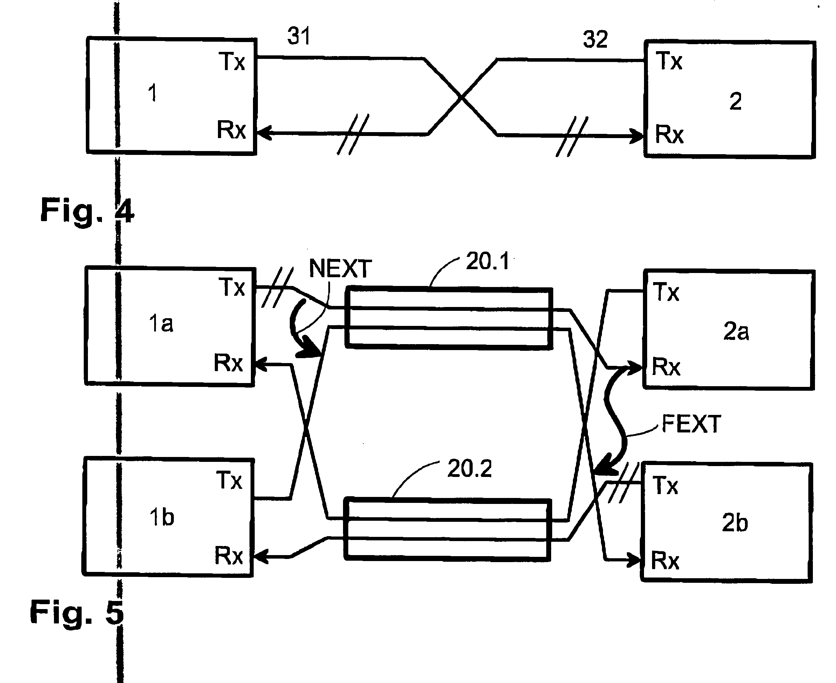

Figur 1 zeigt das Prinzip einer SHDSL-Übertragung gemäss ETSI TS 101524 [1]. Die SHDSL-Übertragungsstrecke 3 zwischen den zwei Modems 1, 2 beinhaltet ein Kupferaderpaar 3 und darüber einen Transport von Daten in Sende- und Empfangsrichtung auf dem gleichen Kupferaderpaar 3. Figur 3 zeigt den für die SHDSL Übertragung massgebenden Schaltungsteil des Modems 1, das sogenannte Front End. Der SHDSL-Übertragungsbaustein 12 weist einen Sendeteil 5 und einen Empfänger 7 auf. Eine analoge Echokompensation, auch Hybrid- oder Gabelschaltung genannt, gebildet aus einer Leitungsnachbildung 4 und einer nachgeschalteten digitalen Echokompensation 6 sorgt für eine genügend grosse Unterdrückung des eigenen Sendesignals wie auch eine Unterdrückung von auf dem Signalweg entstandenen Echos durch etwaige Störstellen im Kabel. Diese Echos werden als eigenes Echo gewertet und unterdrückt, Übrig bleibt das Empfangssignal 9 vom anderen Ende der Übertragungsleitung 11.

Ein kritisches Bauelement in der Übertragungsstrecke ist der Transformator 10, der das Signal in die Leitung 11 koppelt.

Er sollte sehr verzerrungsarm sein, trotzdem aber klein und kostengünstig. Das Übersetzungsverhältnis n2:n1 muss so gewählt sein, dass der vorgegebene Leitungswiderstand erreicht wird, im Falle einer Standard Telefonleitung sind es 135Ω. Da der Sendetreiber 5 sehr niederohmig arbeitet, wird das Sendesignal also herauf transformiert, dass heisst für die Windungszahlen des Transformators 10 muss gelten:

$$n2 > n1.$$

Das Übersetzungsverhältnis muss also auf die Senderseite hin optimiert werden. Das ankommende Empfangssignal wird nun, da aus der Gegenrichtung kommend, herab transformiert und somit abgeschwächt, was sich erst recht nachteilig auswirkt.

Im Verbund mit anderen SHDSL-Übertragungsstrecken im gleichen Kabel aber auf anderen Kupferaderpaaren, stören sich diese Systeme gegenseitig durch Übersprechen. In Figur 2 sind zwei Arten solcher Störungen dargestellt:

- Nah-Nebensprechen NEXT und
- Fern-Nebensprechen FEXT.

Die Beeinflussung ist gegenseitig. Der Übersichtlichkeit wegen sind in der Figur 2 nur die Störungen der Übertragungsstrecke 3a bezüglich der Modems 1a und 2a auf die Übertragungsstrecke 3b mit den Modems 1b und 2b dargestellt. Von den zwei gezeigten Störgrössen ist NEXT das weit grössere Problem, da einerseits das Empfangssignal vom anderen Ende sehr schwach und das Sendesignal des die Störung verursachenden Senders sehr stark ist. FEXT fällt deutlich weniger ins Gewicht, das Sendesignal wird durch den Übertragungskanal bereits gedämpft.

Bei mit Kupferaderpaaren aufgebauten Mittel- und Fernverkehrsstrecken ist mit Streckenlängen bis zu mehreren 100 km zu rechnen. Solche Verbindungen sind oft bei Bahn- und Elektrizitätsbetreibern und in älteren Telecom netzen zu finden. Dort wurden die Verbindungen bisher wie folgt gelöst:

i)Mit HDB3-Systemen, welche bedingt durch die kurze Reichweite der HD3-Übertragungstechnologie eine hohe Anzahl von Regeneratoren entlang der Übertragungsstrecke erfordern.
ii) Mit Trägerfrequenzlösungen, welche einen alten Stand der Technik darstellen.
iii) Mit proprietären, SHDSL gemäss TS 101524 ähnlichen Verfahren. Dort ist es zweifelhaft, ob die spektralen Forderungen der Norm EN TS 101524 eingehalten werden können.

Der vorliegenden Erfindung liegt daher die Aufgabe zugrunde, eine SHDSL-Übertragungsstrecke mit zugehörigen Modems anzugeben, die eine zuverlässige Übertragung auch über grössere Distanzen bzw. Reichweiten erlaubt, so dass die Normen zur Einhaltung der Spektren eingehalten werden und ohne die vorgenannten Normen einer SHDSL-Strecke zu verletzen.

Diese Aufgabe wird durch die im Patentanspruch 1 angegebenen Merkmale gelöst.

Durch die erfindungsgemässe Lösung, wonach die beiden Modems für jede Übertragungsrichtung über je ein separates Kupferaderpaar miteinander verbunden sind; ist eine SHDSL-Übertragungsstrecke geschaffen, bei der die Einflüsse des Nah-Nebensprechens eliminiert werden ohne dass am Übertragungsverfahren selber etwas geändert werden muss und bei dem die handelsüblichen SHDSL-Übertragungsbausteine weiter verwendet werden können.

Der besondere Vorteil liegt darin, das durch zwei separate Kupferaderpaare im Modem je ein Transformator vorgesehen werden kann, deren Übersetzungsverhältnisse je für die betreffende Richtung optimiert werden können. Auf diese Weise ist für die Wahl der Übersetzungsverhältnisse ein Freiheitsgrad gewonnen worden. An den für den für den SHDSL-Übertragungsbaustein vorzunehmenden Einstellungen ändert sich dabei praktisch nichts. Da der Sendetrafo noch immer der selbe ist und sich auch die Einstellungen am Übertragungsbaustein an der Sendeseite höchstens unwesentlich geändert haben, bleibt auch das Sendespektrum unverändert und zum SHDSL gemäss Norm ETSI TS 101524 kompatibel.

Da im praktischen Einsatz stets die Übertragungsrate und kausal dazu die Längen auf der DLL sich beschränkend auswirken, nicht aber die Anzahl benötigter Kupferaderpaare, bietet die vorliegende Erfindung eine wirkungsvolle und trotzdem kostengünstige Lösung der vorgenannten Aufgabe.

Vorteilhafte Ausgestaltungen der Erfindung sind in weiteren Ansprüchen angegeben.

Die Erfindung wird nachfolgend anhand der Zeichnung beispielsweise näher erläutert. Dabei zeigen:

Figur 1 Prinzip einer SHDSL-Übertragungsstrecke gemäss. ETSI TS101524;

Figur 2 Struktur eines bestehenden SHDSL Front End;

Figur 3 Darstellung des Nah- und Fernnebensprechens (NEXT, FEXT bei zwei SHDSL-Übertragungsstrecken gemäss dem Stand der Technik;

Figur 4 eine SHDSL Übertragungsstrecke gemäss der vorliegenden Erfindung;

Figur 5 Auswirkung des Nah- und Fernnebensprechens (NEXT, FEXT bei zwei SHDSL-Übertragungsstrecken gemäss der vorliegenden Erfindung und

Figur 6 eine Ausführungsform eines SHDSL Front End gemäss der vorliegenden Erfindung.

Gemäss der vorliegenden Erfindung wird für die Übertragungsstrecke je Richtung eine gesonderte Kupferaderpaar 31 und 32 bereitgestellt. Dies ist in prinzipieller Art in Figur 4 dargestellt. Dabei wird wie vorstehend ausgeführt auch hier keine Unterscheidung, auf welcher Seite die Modems 1 und 2 angeordnet sind. Gegenüber dem Stand der Technik wird gemäss der vorliegenden Erfindung der Sende- und Empfangspfad aus Sicht eines Modems getrennt, das heisst es wird pro Übertragungsrichtung je eine Kupferaderpaar verwendet.

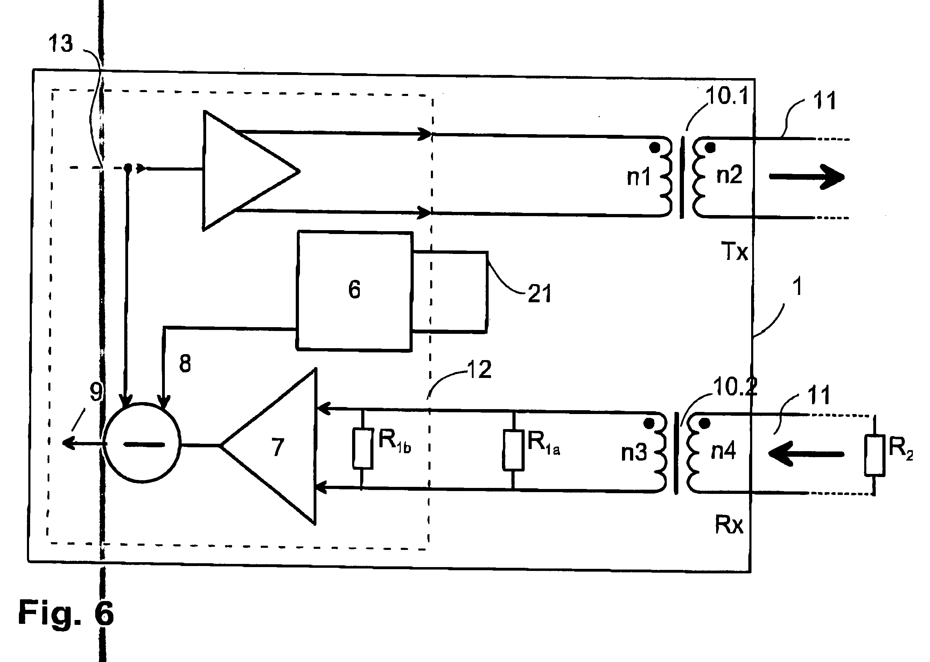

In Figur 6 ist ein Modem 1 dargestellt, das pro Richtung ein eigenes Aderpaar voraussetzt. Zu weiterer Erläuterung wird auf die Figuren 6 und gegenüber dem Stand der Technik auf die Figur 3 Bezug genommen. Es kann wie beim Stand der Technik ein handelsüblicher SHDSL-Übertragungsbaustein 12 eingesetzt werden, z.B. der Baustein PEF24624 von INFINEON. Der Sendepfad Tx mit dem Transformator 10 bzw. 10.1 bleibt gleich. Somit bleiben auch die genormten Pulsformen erhalten. Am Sendetransformator 10.1 ist nur noch das Sendesignal an die Leitung 11 gekoppelt. Das Empfangssignal wird über ein eigenes Aderpaar 11 geführt und über den Empfangseingang Rx über einen eigenen Transformator 10.2 auf den Empfänger 7 gegeben. Mit einem Abschlusswiderstand $R_{1b}$ wir die Leitungsimpedanz auf den Empfängereingang Rx abgeglichen. Eigenes Echo fällt nur noch innerhalb des Modems an. Dies kann mit geeigneten Massnahmen (z. B. beim Layout der Leiterplatte) weiter minimiert werden. Da kein eigenes Echo mehr auf dem Empfangspfad Rx vorhanden ist, werden Hybrid 4 bzw. die chipexterne Gabelschaltung 4 und die Echokompensation 6 nicht mehr benötigt. Die Leitungsnachbildung kann daher entfallen und wird durch einen Kurzschluss 21 als Aussenbeschaltung realisiert. Der digitale Echokompensator 6 stellt selber fest, dass kein oder nur noch ein sehr geringes eigenes Echo mehr ankommt und verhält sich automatisch richtig. Das Übersetzungsverhältnis des Empfangstransformators 10.2 kann nun, da vom Sendepfad Tx entkoppelt, so geändert werden, dass das Empfangssignal herauf transformiert wird, also für die windungszahlen n3, n4 gilt daher:

$$n4 < n3.$$

In Figur 5 sind die Auswirkungen der Störgrössen NEXT und FEXT für eine SHDSL-Übertragungstrecke 3 dargestellt, bei der pro Übertragungsrichtung je ein Kabel 20.1 und 20.2 vorgesehen ist. Jedes Kabel kann n Kupferaderpaare enthalten. Der sehr starke Einfluss von NEXT wirkt sich nicht aus, da alle Kupferaderpaare in der gleichen Richtung betrieben werden und naturgemäss beim Ausgang Tx einen relativ gesehen hohen Pegel aufweisen. Die Störgrösse FEXT ist selbstverständlich immer noch vorhanden, die Auswirkung sind aber naturgemäss geringer als die von NEXT.

Das ideale Übersetzungsverhältnis n3:n4 für den Transformator 10.2 ergibt sich aus dem Leitungswiderstand und dem Eingangswiderstand der Empfangsschaltung. Wird auf den widerstand $R_{1a}$ verzichtet, ergibt sich das maximal mögliche Übersetzungsverhältnis. Auch das Rauschen und andere unerwünschten Signalteile werden entsprechend gleich herauf transformiert. Die einzelnen Schritte der Anschaltung:

$$\left(\frac{n_3}{n_4}\right)^2 = \frac{R_{1a} \| R_{1b}}{R_2} \quad ,$$

aufgelöst ergibt sich:

$$\left(\frac{n_3}{n_4}\right)^2 = \frac{R_{1a} \cdot R_{1b}}{(R_{1a} + R_{1b}) \cdot R_2}$$

Als maximales Übersetzungsverhältnis für den Empfangspfad Rx ergibt sich somit:

$$\frac{R_{1b}}{R_2} = \left(\frac{n_3}{n_4}\right)^2$$

**Liste der verwendeten Bezugszeichen**

| 1, 1a, 1b | Modem |
|---|---|
| 2, 2a, 2b | Modem |
| 3 | SHDSL-Übertragungsstrecke; Kupferaderpaar |
| 4 | Hybrid, Gabelschaltung chip-extern |
| 5 | Sendeteil, Sendetreiber, line driver |
| 6 | digitale Echokompensation, Gabelschaltung chip intern |
| 7 | Empfänger |
| 8 | Echokompensation |
| 9 | Empfangssignal digital |
| 10 | Transformator |
| 10.1 | Sendetransformator |
| 10.2 | Empfangstransformator |
| 11 | Übertragungsleitung, Kupferaderpaar |
| 12 | SHDSL-Übertragungsbaustein, Chip |
| 13 | Sendesignal digital |
| 20.1, 20.2 | Kabel enthaltend n Kupferaderpaare |
| 21 | kurzgeschlossene Aussenbeschaltung der Gabelschaltung |
| 31, 32 | Gesonderte Kupferaderpaare auf einer Übertragungsstrecke 3 |

| n | Anzahl Kupferaderpaare |
|---|---|
| n1, n2 | Windungszahlen des Sendetransformators 10.1 |
| n3, n4 | Windungszahlen des Empfangstransformators 10.2 |
| R$_{1a}$ | wählbarer Abschlusswiderstand |
| R$_{1b}$ | Eingangswiderstand der Empfängerschaltung |
| R$_2$ | Impedanz der Leitung |
| Tx | Sendepfad, Sendeausgang |
| Rx | Empfangspfad, Empfangseingang |

**Liste der verwendeten Akronyme und Abkürzungen**

| DLL | Digital Local Loop |
|---|---|
| ETSI | European Telecommunications Standards Institute, Sophia Antipolis |
| FEXT | Far End Cross Talk, Fern-Nebensprechen |
| NEXT | Near End Cross Talk, Nah-Nebensprechen |
| PSTN | Public Switched Telephone Network |
| SHDSL | Symmetric single pair high bitrate Digital Subscriber Line, Abkürzung gemäss ETSI |
| SDSL | alte Bezeichnung von SHDSL (ETSI-SDSL entspricht SHDSL) |
| TS | Technical Specification |

**Literaturliste**

[1] ETSI TS 101 524 V1..2.1 (2003-03)
Transmission and Multiplexing (TM);
Access transmission system on metallic access cables;
Symmetric single pair high bitrate Digital Subscriber Line (SDSL)

**Patentansprüche**

1. SHDSL-Übertragungsstrecke (3) umfassend je ein Modem (1, 2), wobei jedes Modem (1, 2) einen SHDSL-Übertragungsbaustein (12) aufweist, der mit einem Transformator (10) zur Anschaltung eines Kupferaderpaares (3) verbunden sind;
**dadurch gekennzeichnet, dass**
die beiden Modems (1, 1a, 1b; 2, 2a, 2b) für jede Übertragungsrichtung über je ein separates Kupferaderpaar (11; 31, 32) miteinander verbunden sind,

2. SHDSL-Übertragungsstrecke (3) nach Anspruch 1,
**dadurch gekennzeichnet dass**
der SHDSL-Übertragungsbaustein (12) pro Übertragungsrichtung mit je einem eigenen Transformator (10.1; 10.1) verbunden ist.

3. SHDSL-Übertragungsstrecke (3) nach Anspruch 2,
**dadurch gekennzeichnet dass**
die Windungsverhältnisse (n1:n2; n3:n4) der beiden Transformatoren verschieden sind.

4. SHDSL-Übertragungsstrecke (3) nach Anspruch 3,
**dadurch gekennzeichnet dass**
das Windungsverhältnis des Transformators der Empfangsrichtung (n3:n4) so gewählt ist, dass das eingehende Signal hinauftransformiert ist.

5. SHDSL-Übertragungsstrecke (3) nach einem der Ansprüche 1 bis 4,
**dadurch gekennzeichnet dass**
der SHDSL-Übertragungsbaustein (12) eine Gabelschaltung (6) aufweist, deren Anschlüsse (21) kurzgeschlossen sind.

Fig. 1

Fig. 2

**Fig. 3**

EP 1 722 488 A1

**Fig. 4**

**Fig. 5**

EP 1 722 488 A1

Fig. 6

EP 1 722 488 A1

European Patent
Office

**EUROPEAN SEARCH REPORT**

Application Number

EP 05 01 0455

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 719 006 A (DIGITAL EQUIPMENT CORPORATION) 26 June 1996 (1996-06-26) * column 7, line 55 - column 9, line 5; figure 4 * ----- | 1-5 | H04B3/32 |
| | | | |
| | | | TECHNICAL FIELDS SEARCHED (Int.Cl.7) |
| | | | H04B H04L |

The present search report has been drawn up for all claims

| Place of search | Date of completion of the search | Examiner |
|---|---|---|
| The Hague | 28 September 2005 | De Iulis, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.....................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 05 01 0455

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2005

| Patent document cited in search report | Publication date | Patent family member(s) | Publication date |
|---|---|---|---|
| EP 0719006 A | 26-06-1996 | NONE | |

EPO FORM P0459

For more details about this annex : see Official Journal of the European Patent Office, No. 12/82